# FASCICULE DE BREVET EUROPEEN

(11) **EP 0 715 434 B1**
(45) Date de publication et mention de la délivrance du brevet: **28.08.2002**
(21) Numéro de dépôt: 95402661.3
(22) Date de dépôt: 27.11.1995
(51) Int. Cl.: H04L 1/20

(54) **Dispositif de détection de présence d'une porteuse modulée en numérique**
Detektionsgerät zum Erkennung eines digital modulierten Trägers
Detection device for presence of a digitally modulated carrier

(30) Priorité: 02.12.1994 FR 9414528
(43) Date de publication de la demande: 05.06.1996
(73) Titulaire: ALCATEL, 75382 Paris Cédex 08 (FR)
(72) Inventeur: Leclerc, Gérard, F-95520 Osny (FR); Blavette, Denis, F-95310 Saint Ouen l'Aumone (FR); Lemaitre, Didier, F-95280 Jouy le Moutier (FR)
(74) Mandataire: Smith, Bradford Lee

(56) Documents cités:
- EP-A- 0 089 853
- PATENT ABSTRACTS OF JAPAN vol. 13 no. 413 (E-820) ,12 Septembre 1989 & JP-A-01 152811 (AKAI ELECTRIC CO LTD) 15 Juin 1989,

## Description

Le domaine de l'invention est celui des télécommunications numériques, notamment par satellite, et concerne plus précisément un dispositif de détection de la présence ou de l'absence d'une onde porteuse d'un signal reçu par un récepteur, cette onde porteuse étant modulée par un signal numérique à la fréquence d'une horloge symbole. L'invention s'applique à tout type de modulation numérique, par exemple aux modulations par déplacement de phase (MDP-M, Modulation de phase à M états) ou aux modulations d'amplitude et de phase (MDAP-M, Modulation de phase et d'amplitude à M états) et à celles notamment utilisées dans les systèmes de télécommunications AMRT (Accès multiple à répartition dans le temps) ou AMRF (Accès multiple à répartition de fréquences).

Pour illustrer un exemple d'application de l'invention, on se placera dans la description suivante dans le cas d'un modem utilisé en réception dans un système de transmission par satellite.

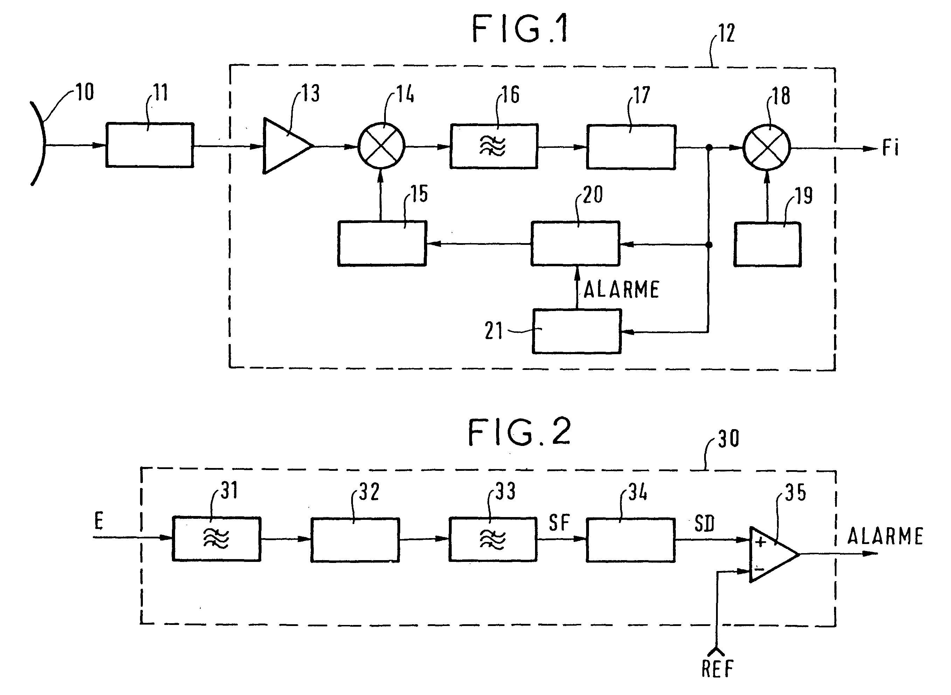

La figure 1 est un schéma synoptique d'un système de réception de l'état de la technique pour une transmission par satellite, le récepteur utilisé comprenant un détecteur de présence ou d'absence de porteuse.

Le système de réception de la figure 1 comporte une antenne 10 recevant un signal hyperfréquence constitué par une porteuse en bande KU (12 GHz) modulée par un signal numérique, par exemple en MDP-4. Le signal capté par l'antenne 10 est appliqué à un LNB (Low Noise Block converter) 11 comprenant de manière classique un amplificateur faible bruit suivi par un dispositif de transposition en fréquence intermédiaire. Le signal de sortie du LNB 11 est par exemple en bande BIS (950 - 1750 MHz) et appliqué à un étage 12 de transposition de fréquence du modem.

L'étage 12 comporte un amplificateur 13 suivi par un mélangeur 14 recevant un signal de transposition d'un synthétiseur de fréquence 15. Le mélangeur 14 et le synthétiseur de fréquence 15 constituent un premier étage de transposition de fréquence. Le signal de sortie du mélangeur 14 a une fréquence fixe, comme il sera vu par la suite, et est appliqué à un filtre passe-bande 16 suivi par un dispositif 17 de commande automatique de gain (CAG). Le signal de sortie de la CAG 17 est appliqué à un second étage de transposition de fréquence constitué par un mélangeur 18 piloté par un oscillateur local 19. Le signal de sortie du mélangeur 18 est un signal Fl à 70 MHz. Ce signal est ensuite appliqué à l'étage de démodulation du récepteur qui a pour fonction de restituer les symboles MDP-4 transmis.

Le signal de sortie de la CAG 17 est également appliqué à un dispositif de commande automatique de fréquence 20 (CAF) pilotant le synthétiseur de fréquence 15, ainsi qu'à un dispositif 21 de détection de présence ou d'absence de porteuse. Le CAF 20 a pour fonction de compenser les éventuelles dérives de fréquence dues au dispositif de transposition de fréquence compris dans le LNB 11. Les dispositifs de transposition de fréquence habituellement employés dans les LNB comprennent un oscillateur local constitué par un résonateur. Un tel oscillateur peut présenter des dérives de fréquence importantes autour de sa fréquence centrale, d'où la nécessité d'employer un CAF en aval pour assurer qu'en sortie du mélangeur 14 la fréquence soit constante.

Le dispositif 21 de détection de présence ou d'absence de porteuse a pour fonction d'inhiber le fonctionnement du CAF 20 lorsqu'une absence de porteuse a été détectée, afin que le synthétiseur 15, qui est avantageusement large bande, ne s'accroche pas sur une fréquence intermédiaire correspondant à celle d'un canal adjacent. En effet, dans les transmissions par satellite, plusieurs porteuses sont utilisées simultanément au même débit symbole R et, selon la norme Intelsat IESS-308, deux canaux adjacents doivent pouvoir présenter des bandes se chevauchant partiellement (écart entre porteuses égal à 0,7R). De plus, un des canaux adjacents à celui reçu doit pouvoir présenter une amplitude allant jusqu'à 7 dB au-delà de celui reçu.

Dans ces circonstances, si l'on ne prévoyait pas une inhibition du CAF 20 lorsque la porteuse disparaît, par exemple suite à un évanouissement sélectif temporaire, le CAF, qui est large bande, resynchroniserait le synthétiseur 15 sur un des canaux adjacents. Cette porteuse ne pourrait alors plus être récupérée ultérieurement et la liaison serait coupée. C'est pourquoi le dispositif 21 de détection de présence ou d'absence de porteuse génère un signal ALARME inhibant le fonctionnement du CAF 20 lorsqu'une absence de porteuse est détectée.

De manière connue, la détection de la présence ou de l'absence d'une porteuse est réalisée par détection du niveau Fl (Fréquence Intermédiaire), c'est à dire que l'énergie du signal issu de la CAG 17 est comparée à une valeur de référence. Si cette valeur de référence est dépassée, la porteuse est considérée présente alors que si la valeur de référence n'est pas dépassée, la porteuse est considérée absente.

Cette méthode de détection de porteuse par détection de niveaux de signaux est celle utilisée par exemple dans les documents « Patent Abstracts of Japan", vol. 13, n° 413, (E-820), 12 Sept.1989 & JP-A-01 152811 et EP-A-0 089 853.

La détection de porteuse par détection FI pose cependant un problème lorsque la dynamique de la CAG 17 placée en amont est supérieure au rapport signal à bruit du signal reçu. En effet, en cas d'absence de porteuse, la CAG 17 amplifie le niveau de bruit au niveau de la porteuse absente et le signal ALARME n'est pas généré. Dans ce cas, le CAF 20 n'est pas inhibé et le synthétiseur 15 se calera sur la fréquence intermédiaire correspondant à celle d'un canal adjacent.

De plus, même en l'absence de canaux adjacents, l'absence de détection de perte de porteuse peut avoir des incidences importantes sur le fonctionnement du récepteur. A titre d'exemple, dans une application de transmission AMRT, le récepteur reçoit des paquets d'informations espacés dans le temps. Afin de démoduler ces informations, il doit connaître l'enveloppe du signal reçu, c'est à dire les moments où débutent et se terminent les paquets. Dans l'état de la technique, cette information temporelle est obtenue de manière prédictive. L'inconvénient est que si l'émission des paquets cesse, par exemple suite à une panne de l'émetteur, la CAG amplifiera du bruit, le détecteur Fl de présence de porteuse ne fonctionnera pas et le CAF ne sera pas inhibé. En conséquence, le système AMRT se désynchronisera.

La présente invention a notamment pour objectif de remédier à ces inconvénients.

Plus précisément, un des objectifs de l'invention est de fournir un dispositif fournissant une information fiable de présence ou d'absence d'une onde porteuse d'un signal reçu. Cette information ne doit notamment pas être tributaire d'une CAG placée en amont qui viendrait amplifier du bruit en l'absence de porteuse.

Cet objectif, ainsi que d'autres qui apparaîtront par la suite, est atteint grâce au fait que ce dispositif comporte :
- un circuit non linéaire recevant le signal reçu ou le signal reçu transposé en fréquence, ce circuit non linéaire fournissant notamment un signal dont la fréquence correspond à la fréquence de l'horloge symbole,
- un filtre bande étroite centré sur la fréquence de cette horloge symbole et fournissant un signal filtré,
- des moyens de détection du signal filtré fournissant un signal détecté,
- des moyens de comparaison du signal détecté avec une valeur de référence, le signal de sortie de ces moyens de comparaison constituant un signal indicateur de la présence ou de l'absence de l'onde porteuse.

Ainsi, la détection de la présence ou de l'absence de l'onde porteuse est obtenue grâce à la détection de la raie d'horloge générée par le circuit non-linéaire. La présence ou l'absence d'une porteuse modulée numériquement correspond respectivement à celle de la raie d'horloge.

Le dispositif de l'invention comporte avantageusement un dispositif de transposition de fréquence placé entre le circuit non linéaire et le filtre bande étroite. Il est ainsi possible de détecter la présence ou l'absence de porteuses modulées par des signaux numériques à des fréquences symboles différentes.

Dans une application AMRF, le circuit non linéaire est préférentiellement précédé d'un filtre passe-bande assurant une troncature de canaux adjacents.

Le dispositif de l'invention trouve un intérêt tout particulier lorsqu'il est compris dans un dispositif de transposition de fréquence comprenant un dispositif de commande automatique de gain placé en amont.

Dans une application préférentielle, le signal indicateur de la présence ou de l'absence de l'onde porteuse est appliqué à un dispositif de commande automatique de fréquence.

L'invention concerne également un récepteur de signaux multiplexés dans le temps comprenant un dispositif tel que décrit ci-dessus pour la délivrance d'un signal indicatif de la présence de paquets d'information.

Par ailleurs, l'invention concerne un récepteur comprenant un tel dispositif prévu pour la détection de fréquences d'horloges symbole et l'identification des porteuses correspondantes. Il est ainsi possible d'identifier une porteuse, et donc un canal de transmission, à partir de la détection de la fréquence d'horloge symbole correspondant à ce canal.

L'invention concerne également un procédé de détection de la présence ou de l'absence d'une onde porteuse d'un signal reçu par un récepteur, l'onde porteuse étant modulée par un signal numérique à la fréquence d'une horloge symbole, ce procédé consistant à détecter la présence de la fréquence de l'horloge symbole dans le signal reçu pour indiquer la présence de l'onde porteuse.

D'autres caractéristiques et avantages de l'invention apparaîtront à la lecture de la description suivante d'un mode de réalisation préférentiel, donné à titre illustratif et non limitatif, et des dessins annexés dans lesquels :
- la figure 1 est un schéma synoptique d'un système de réception pour une transmission par satellite, le récepteur utilisé comprenant un détecteur de présence ou d'absence de porteuse ;
- la figure 2 est un schéma synoptique d'un dispositif de détection de la présence ou de l'absence d'une onde porteuse selon l'invention ;
- la figure 3 est un schéma synoptique d'un autre système de réception comprenant un détecteur de présence ou d'absence de porteuse ;
- la figure 4 est un schéma synoptique d'un jeu de filtres en parallèle suivis par un multiplexeur, pouvant avantageusement remplacer le filtre bande étroite 33 de la figure 3, pour la détection de fréquences d'horloges symbole et l'identification des porteuses correspondantes ;
- la figure 5 est un schéma synoptique d'un étage pouvant se substituer au jeu de filtres associés au multiplexeur de la figure 4.

La figure 1 a été décrite précédemment en référence à l'état de la technique.

Sur la figure 2, un dispositif de détection de la présence ou de l'absence d'une onde porteuse selon l'invention est généralement référencé par 30. Ce dispositif reçoit un signal d'entrée E et fournit un signal de sortie ALARME indicatif de la présence ou de l'absence d'une onde porteuse.

Le signal E peut être le signal reçu en hyperfréquence ou alors ce signal reçu transposé en fréquence. Il peut, dans ce dernier cas, indifféremment s'agir d'un signal en fréquence intermédiaire ou d'un signal en bande de base.

Lorsqu'il s'agit d'un signal en fréquence intermédiaire, le signal E est par exemple le signal issu de la CAG 17 de la figure 1. Dans ce cas, le dispositif 30 de la figure 2 remplace celui référencé 21 à la figure 1.

Le signal E est appliqué à l'entrée d'un filtre passe-bande 31, facultatif et représenté en traits discontinus, dont la fonction est de réaliser une troncature des canaux adjacents à celui considéré. Un tel filtre est notamment utilisé lorsque le signal reçu est de type AMRF. Le signal de sortie du filtre 31 est appliqué à l'entrée d'un circuit non linéaire 32, ce circuit non linéaire fournissant notamment un signal dont la fréquence correspond à la fréquence de l'horloge symbole ayant servi à moduler la porteuse au niveau émission.

Tout type de circuit non linéaire convient : on peut utiliser un amplificateur fonctionnant en saturation, un circuit d'élévation au carré,... De manière générale, toute non-linéarité produit dans le signal de sortie du circuit 32 un ensemble de raies (composantes fréquentielles) dont celle de l'horloge symbole utilisée au niveau émission. Tout spectre, que ce soit celui d'un signal hyperfréquence, en fréquence intermédiaire ou en bande de base, comporte cette raie d'horloge symbole, du moment que la porteuse est modulée par un signal numérique à cette fréquence symbole.

Le signal de sortie du circuit 32 est appliqué à un filtre bande étroite 33 centré sur la fréquence de cette horloge symbole. On suppose que la fréquence de l'horloge symbole, c'est à dire de modulation, est connue. On obtient ainsi en sortie du filtre 33 un signal filtré SF correspondant à l'horloge symbole utilisée à l'émission. Ce signal filtré SF est appliqué à des moyens de détection 34, par exemple constitués par un détecteur à diode, fournissant un signal détecté SD. En présence d'une porteuse à l'entrée du récepteur, le signal détecté SD a un niveau important, alors qu'en l'absence de porteuse, ce signal détecté SD a un niveau faible. Le signal détecté SD est ensuite appliqué à des moyens de comparaison 35 de ce signal détecté SD avec une valeur de référence REF réglable prévue pour immuniser le système au bruit.

Le signal de sortie des moyens de comparaison 35 constitue le signal ALARME indicateur de la présence ou de l'absence de l'onde porteuse.

Le principal avantage de l'invention est que le gain du dispositif de l'invention est important puisque la largeur de bande du filtre 33 peut être très réduite par rapport à la bande de Nyquist du filtre utilisé à l'émission (spectre à 3 dB). De plus, la détection de la fréquence de l'horloge symbole n'est généralement pas perturbée par les conditions de propagation. La largeur de bande du filtre 33 peut par exemple être de l'ordre de 300 kHz pour tenir compte de la gigue et d'un éventuel Doppler, pour un débit symbolique de 30 Mbauds en MDP-4, soit pour une bande de Nyquist de 30 MHz. On obtient ainsi un gain de 20 dB sur le rapport signal à bruit.

Si le dispositif de l'invention doit être utilisé dans un récepteur recevant des signaux modulés à des fréquences symboles différentes, on placera un dispositif de transposition de fréquence entre le circuit non linéaire 32 et le filtre bande étroite 33, afin de toujours disposer du signal d'horloge symbole en amont de ce filtre. Il est également possible d'utiliser un filtre bande étroite agile en fréquence.

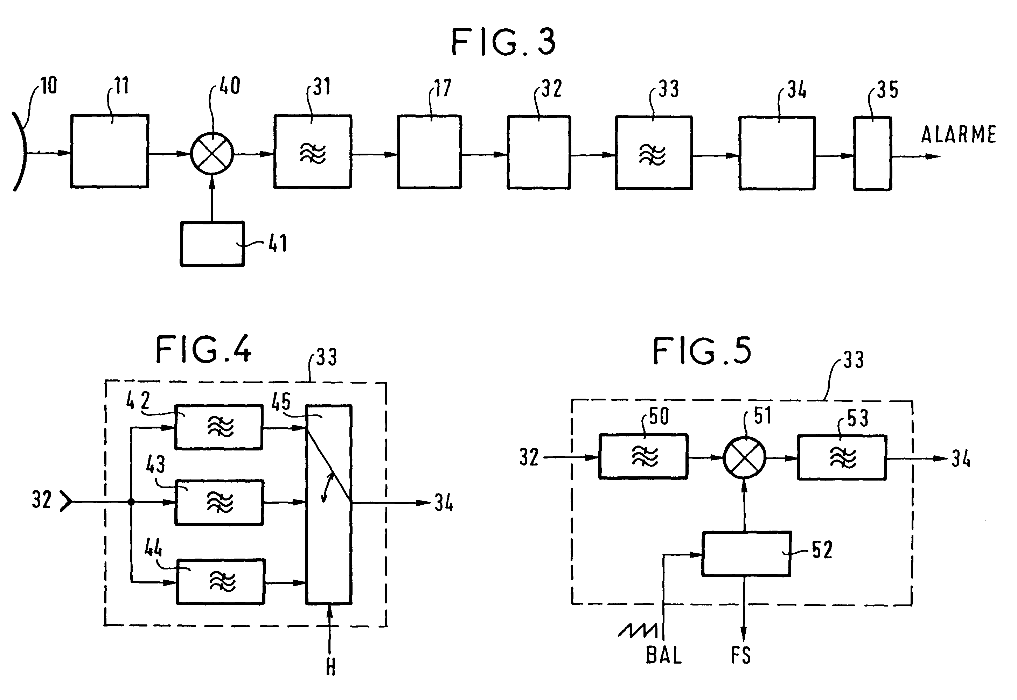

La figure 3 est un schéma synoptique d'un autre système de réception comprenant un détecteur de présence ou d'absence de porteuse.

Ce système de réception comporte, outre les éléments déjà mentionnés pour la description de la figure 1 et qui portent les mêmes références numériques, un étage de transposition de fréquence composé par un mélangeur 40 piloté par un synthétiseur de fréquence 41, par exemple destiné à fournir un signal FI à 450 MHz à partir d'un signal de fréquence environ égale à 1 GHz. Les moyens de comparaison 35 fournissent le signal ALARME indicatif de la présence ou de l'absence de la porteuse.

La figure 4 est un schéma synoptique d'un jeu de filtres en parallèle suivis par un multiplexeur, pouvant avantageusement remplacer le filtre 33 de la figure 3, pour la détection de fréquences d'horloges symbole et l'identification des porteuses correspondantes. Dans cette application, on cherche à identifier une ou plusieurs porteuses, chaque porteuse correspondant à un canal de transmission et ayant sa propre fréquence d'horloge symbole, les fréquences d'horloge symbole étant différentes dans les différents canaux. Il peut par exemple s'agir, dans une application civile, d'identifier quelle porteuse est reçue à partir du débit symbolique correspondant.

On utilise ici un jeu de trois filtres passe-bande 42, 43, 44 dont les entrées sont reliées en parallèle, les bandes passantes de ces filtres étant identiques mais centrées sur des fréquences différentes. Les sorties des filtres sont appliquées à un multiplexeur 45 dont la sortie est reliée aux moyens de détection 34. Le multiplexeur est commandé par un signal d'horloge H. Lorsqu'un débit symbolique correspondant à celui d'une porteuse est détecté, le signal d'horloge est inhibé (par exemple à l'aide du signal ALARME) et l'information de débit symbolique est fournie aux moyens de démodulation multi-débits.

La figure 5 est un schéma synoptique d'un étage pouvant se substituer à l'étage de la figure 4. Dans ce mode de réalisation, un filtre passe-bas 50 supprime les fréquences supérieures à celle de la fréquence d'horloge symbole attendue la plus importante. Un étage de transposition de fréquences constitué par un mélangeur 51 piloté par un oscillateur local 52 reçoit ce signal filtré. L'oscillateur 52 reçoit un signal BAL de balayage de fréquences et le signal de sortie du mélangeur 51 est appliqué à un filtre passe-bande à bande étroite 53, par exemple identique à celui référencé 33 dans les figures 2 et 3. L'oscillateur local 52 fournit un signal FS indicateur de la fréquence d'horloge symbole courante. Lorsqu'une horloge symbole est détectée, le signal de balayage BAL est inhibé. Ce mode de réalisation peut par exemple être utilisé dans un scanner radiofréquences.

L'invention trouve un intérêt tout particulier dans les récepteurs de signaux AMRT ou AMRF où une CAG est placée en amont. Elle permet de nettement distinguer le spectre numérique dû à la modulation à la fréquence symbole du bruit, pour des rapports Eb/No supérieurs ou égaux à 3 dB.

L'invention concerne également un procédé de détection de la présence ou de l'absence d'une onde porteuse d'un signal reçu par un récepteur, cette onde porteuse étant modulée par un signal numérique à la fréquence d'une horloge symbole, ce procédé consistant à détecter la présence de la fréquence de l'horloge symbole dans le signal reçu pour indiquer la présence de l'onde porteuse.

## Revendications

1. Dispositif de détection de la présence ou de l'absence d'une onde porteuse d'un signal reçu par un récepteur, ladite onde porteuse étant modulée par un signal numérique à la fréquence d'une horloge symbole, **caractérisé en ce qu'**il comporte :
- un circuit non linéaire (32) recevant ledit signal reçu ou ledit signal reçu transposé en fréquence, ledit circuit non linéaire (32) fournissant notamment un signal dont la fréquence correspond à ladite fréquence de ladite horloge symbole,
- un filtre bande étroite (33) centré sur la fréquence de ladite horloge symbole et fournissant un signal filtré (SF),
- des moyens de détection (34) dudit signal filtré (SF) fournissant un signal détecté (SD),
- des moyens de comparaison (35) dudit signal détecté (SD) avec une valeur de référence (REF), le signal de sortie desdits moyens de comparaison constituant un signal (ALARME) indicateur de la présence ou de l'absence de ladite onde porteuse.

2. Dispositif selon la revendication 1, **caractérisé en ce qu'**il comporte un dispositif de transposition de fréquence entre ledit circuit non linéaire (32) et ledit filtre bande étroite (33).

3. Dispositif selon l'une des revendications 1 et 2, **caractérisé en ce que** ledit circuit non linéaire (32) est précédé d'un filtre passe-bande (31) assurant une troncature de canaux adjacents dans une transmission AMRF.

4. Dispositif selon l'une des revendications 1 à 3, **caractérisé en ce qu'**il est compris dans un dispositif de transposition de fréquence (12) comprenant un dispositif de commande automatique de gain (17) placé en amont.

5. Dispositif selon la revendication 4, **caractérisé en ce que** ledit signal (ALARME) indicateur de la présence ou de l'absence de ladite onde porteuse est appliqué à un dispositif de commande automatique de fréquence (20).

6. Récepteur de signaux multiplexés dans le temps, **caractérisé en ce qu'**il comporte un dispositif selon l'une des revendications 1 à 5.

7. Récepteur selon la revendication 6, **caractérisé en ce qu'**il comporte un étage de transposition de fréquences (51, 52) pour le balayage de fréquences d'horloge symbole, la détection desdites fréquences d'horloges symbole et l'identification des porteuses correspondantes.

8. Procédé de détection de la présence ou de l'absence d'une onde porteuse d'un signal reçu par un récepteur, ladite onde porteuse étant modulée par un signal numérique à la fréquence d'une horloge symbole, **caractérisé en ce qu'**il comporte les étapes suivantes :
- une étape de réception dudit signal reçu ou ledit signal reçu est transposé en fréquence afin d'obtenir un signal dont la fréquence correspond à ladite fréquence de ladite horloge symbole,
- une étape de filtrage en bande étroite, ledit filtrage étant centré sur la fréquence de ladite horloge symbole et fournissant un signal filtré (SF),
- une étape de détection dudit signal filtré (SF) fournissant un signal détecté (SD),
- une étape de comparaison dudit signal détecté (SD) avec une valeur de référence (REF) afin de constituer un signal (ALARME) indicateur de la présence ou de l'absence de ladite onde porteuse.

## Patentansprüche

1. Vorrichtung zur Erfassung des Vorhandenseins oder Nichtvorhandenseins einer Trägerwelle eines von einem Empfänger empfangenen Signals, wobei die Trägerwelle mit einem digitalen Signal bei der Frequenz eines Symboltakts moduliert ist, **dadurch gekennzeichnet, dass** sie umfasst:
eine nichtlineare Schaltung (32), die dieses empfangene Signal oder das frequenzverschobene empfangene Signal empfängt, wobei die nichtlineare Schaltung (32) insbesondere ein Signal liefert, dessen Frequenz der Frequenz des Symboltaktes entspricht,
ein Schmalbandfilter (33), das auf die Frequenz des Symboltakts zentriert ist und ein gefiltertes Signal (FF) liefert,
Mittel zur Erfassung (34) des gefilterten Signals (FF), die ein erfasstes Signal (SD) liefern,
Mittel zum Vergleichen (35) des erfassten Signals (SD) mit einem Referenzwert (REF), wobei das Ausgangssignal der Mittel zum Vergleichen ein das Vorhandensein oder Nichtvorhandensein der Trägerwelle anzeigendes Signal (ALARME) darstellt.

2. Vorrichtung nach Anspruch 1, **dadurch gekennzeichnet, dass** sie eine Frequenzverschiebungsvorrichtung zwischen der nichtlinearen Schaltung (32) und dem Schmalbandfilter (33) umfasst.

3. Vorrichtung nach einem der Ansprüche 1 und 2, **dadurch gekennzeichnet, dass** vor der nichtlinaren Schaltung (32) ein Bandpassfilter (31) liegt, das eine Beschneidung benachbarter Kanäle bei einer FDMA-Übertragung gewährleistet.

4. Vorrichtung nach einem der Ansprüche 1 bis 3, **dadurch gekennzeichnet, dass** sie in einer Frequenzverschiebungsvorrichtung (12) enthalten ist, die eine vorgeschaltete automatische Verstärkungssteuerungsvorrichtung (17) umfasst.

5. Vorrichtung nach Anspruch 4, **dadurch gekennzeichnet, dass** das das Vorhandensein oder Nichtvorhandensein der Trägerwelle anzeigende Signal (ALARME) an eine automatische Frequenzsteuervorrichtung (20) angelegt ist.

6. Empfänger für Zeitmultiplex-Signale, **dadurch gekennzeichnet, dass** er eine Vorrichtung nach einem der Ansprüche 1 bis 5 umfasst.

7. Empfänger nach Anspruch 6, **dadurch gekennzeichnet, dass** er eine Frequenzverschiebungsstufe (51, 52) zum Abtasten von Symboltaktfrequenzen, zur Erfassung der Symboltaktfrequenzen und zur Identifizierung der entsprechenden Träger umfasst.

8. Verfahren zum Erfassen des Vorhandenseins oder Nichtvorhandenseins einer Trägerwelle eines von einem Empfänger empfangenen Signals, wobei die Trägerwelle mit einem digitalen Signal bei der Frequenz eines Symboltakts moduliert ist, **dadurch gekennzeichnet, dass** es die folgenden Schritte umfasst:
einen Schritt des Empfangens des empfangenen Signals, wobei das empfangene Signal frequenzverschoben wird, um ein Signal zu erhalten, dessen Frequenz der Frequenz des Symboltaktes entspricht,
einen Schritt des schmalbandigen Filterns, wobei die Filterung auf die Frequenz des Symboltakts zentriert ist und ein gefiltertes Signal (SF) ergibt,
einen Schritt der Erfassung des gefilterten Signals (SF), der ein erfasstes Signal (SD) ergibt,
einen Schritt des Vergleichens des erfassten Signals (SD) mit einem Referenzwert (REF), um ein die Anwesenheit oder Nichtanwesenheit der Trägerwelle anzeigendes Signal (ALARME) zu bilden.

## Claims

1. Apparatus for detecting the presence or the absence of a signal carrier wave received by a receiver, said carrier wave being modulated by a digital signal at a symbol clock frequency, said apparatus being **characterized in that** it includes:
a non-linear circuit (32) receiving the received signal or said received signal after it has been frequency transposed, said non-linear circuit (32) supplying in particular a signal whose frequency corresponds to said symbol clock frequency;
a narrow-band filter (33) centered on said symbol clock frequency and supplying a filtered signal (SF);
detection means (34) for detecting said filtered signal (SF) and for supplying a detection signal (SD); and
comparator means (35) for comparing said detection signal (SD) with a reference value (REF), the output signal from said comparator means constituting a signal (ALARM) indicating the presence or the absence of said carrier wave.

2. Apparatus according to claim 1, **characterized in that** it includes frequency transposition apparatus between said non-linear circuit (32) and said narrow-band filter (33).

3. Apparatus according to claim 1 or 2, **characterized in that** said non-linear circuit (32) is preceded by a band-pass filter (31) for truncating adjacent channels in FDMA transmission.

4. Apparatus according to any one of claims 1 to 3, **characterized in that** it is included in frequency transposition apparatus (12) that includes automatic gain control apparatus (17) placed upstream.

5. Apparatus according to claim 4, **characterized in that** said signal (ALARM). indicating the presence or the absence of said carrier wave is applied to automatic frequency control apparatus (20).

6. A receiver for receiving time-division multiplexed signals, said receiver being **characterized in that** it includes apparatus according to any one of claims 1 to 5.

7. A receiver according to claim 6, **characterized in that** it includes a frequency transposition stage (51, 52) for sweeping symbol clock frequencies, detecting said symbol clock frequencies, and identifying corresponding carriers.

8. A method of detecting the presence or the absence of a signal carrier wave received by a receiver, said carrier wave being modulated by a digital signal at a symbol clock frequency, said method being **characterized in that** it includes the following steps:
a step of receiving said received signal or said received signal after it has been frequency transposed so as to obtain a signal whose frequency corresponds to said symbol clock frequency;
a step of narrow-band filtering, said filtering being centered on said symbol clock frequency and supplying a filtered signal (SF);
a step of detecting said filtered signal (SF) and of supplying a detection signal (SD); and
a step of comparing said detection signal (SD) with a reference value (REF) so as to constitute a signal (ALARM) indicating the presence or the absence of said carrier wave.
